# EUROPÄISCHE PATENTSCHRIFT

(11) **EP 3 948 719 B1**
(45) Veröffentlichungstag und Bekanntmachung des Hinweises auf die Patenterteilung: **19.11.2025**
(21) Anmeldenummer: 20726010.0
(22) Anmeldetag: 08.05.2020
(51) Int. Cl.: G06Q 10/06, G06Q 10/00

(54) **VERFAHREN UND STEUEREINRICHTUNG ZUM AUTOMATISCHEN REINIGEN EINES KRAFTFAHRZEUGS**
METHOD AND CONTROL DEVICE FOR AUTOMATICALLY CLEANING A MOTOR VEHICLE
PROCÉDÉ ET DISPOSITIF DE COMMANDE POUR LE NETTOYAGE AUTOMATIQUE D'UN VÉHICULE AUTOMOBILE

(30) Priorität: 15.05.2019 DE 102019207036
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: KURZHALS, Stephan, 38364 Schöningen (DE); LUX, Stefan, 38528 Adenbüttel (DE)
(86) Internationale Anmeldenummer: PCT/EP2020/062809
(87) Internationale Veröffentlichungsnummer: WO 2020/229327

(56) Entgegenhaltungen:
- DE-A1- 102014 226 358
- US-A1- 2015 348 335

## Beschreibung

Die Erfindung betrifft ein Verfahren und eine Steuereinrichtung zum automatischen Reinigen eines Kraftfahrzeugs. Des Weiteren betrifft die Erfindung ein Kraftfahrzeug mit einer derartigen Steuereinrichtung.

Kraftfahrzeuge unterliegen während ihres Gebrauchs einer Verschmutzung. Dies kann sowohl optische als auch technische Beeinträchtigungen nach sich ziehen. Letzteres kann beispielsweise der Fall sein, wenn das Kraftfahrzeug im Winter Streusalz ausgesetzt ist, was zur Rostbildung am Kraftfahrzeug führen kann.

Die US 2018/0082494 A1 zeigt ein Verfahren zum automatischen Warten eines autonom fahrenden Kraftfahrzeugs. Das Kraftfahrzeug kann selbständig einen Wartungstermin ausmachen und beispielsweise eine Werkstatt autonom anfahren. Auch ist es möglich, dass das Kraftfahrzeug autonom eine Waschanlage anfährt.

Die US 2015/0348335 A1 zeigt ebenfalls ein Verfahren, bei welchem ein autonom fahrendes Kraftfahrzeug automatisch einer Wartung unterzogen wird. Darunter kann auch fallen, dass das Kraftfahrzeug automatisch gereinigt wird. Dafür kann das Kraftfahrzeug automatisch eine Waschanlage anfahren. Danach kann das Kraftfahrzeug wiederum autonom beispielsweise eine Garage eines Fahrzeuginhabers anfahren.

Die DE 10 2014 226358 A1 beschreibt, wie anhand einer ermittelten Oberflächenverschmutzung eines Kraftfahrzeugs eine Waschempfehlung für das Kraftfahrzeug ausgegeben werden kann.

Es ist die Aufgabe der vorliegenden Erfindung, eine Lösung bereitzustellen, mittels welcher ein Kraftfahrzeug besonders bedarfsgerecht automatisch gereinigt werden kann.

Diese Aufgabe wird durch ein Verfahren sowie durch eine Steuereinrichtung zum automatischen Reinigen eines Kraftfahrzeugs mit den Merkmalen der unabhängigen Ansprüche gelöst. Weitere mögliche Ausgestaltungen der Erfindung sind in den abhängigen Ansprüchen angegeben.

Bei dem erfindungsgemäßen Verfahren zum automatischen Reinigen eines Kraftfahrzeugs wird mittels einer Steuereinrichtung des Kraftfahrzeugs ein Reinigungsbedarf erkannt. Die Steuereinrichtung wählt eine Reinigungseinrichtung aus und bucht einen Reinigungstermin in der ausgewählten Reinigungseinrichtung anhand zumindest eines Kriteriums, nachdem die Steuereinrichtung den Reinigungsbedarf erkannt hat. Das Kraftfahrzeug wird autonom mittels der Steuereinrichtung zur ausgewählten Reinigungseinrichtung manövriert, sodass das Kraftfahrzeug spätestens zum gebuchten Reinigungstermin die Reinigungseinrichtung erreicht, wo das Kraftfahrzeug gereinigt wird. Nachdem die Reinigung des Kraftfahrzeugs beendet wurde, wird das Kraftfahrzeug autonom mittels der Steuereinrichtung zu einem vorgegebenen Abstellort manövriert. Das Kraftfahrzeug kann dazu ausgelegt sein, autonom zu fahren, und zwar ohne dass sich ein Fahrzeuginsasse im Kraftfahrzeug aufhalten muss, kann also in einem Fahrmodus gemäß der SAE Autonomiestufe 5 betrieben werden. Die Steuereinrichtung kann in Teilen, insbesondere hinsichtlich der Verarbeitung und Interpretation der Sensorwerte auch offboard, also in einem fahrzeugexternen Rechnersystem oder Rechnerverbund außerhalb des Fahrzeuges ausgeführt sein.

Das erfindungsgemäße Verfahren sieht vor, dass eine Sensoreinrichtung des Kraftfahrzeugs einen Verschmutzungsgrad des Kraftfahrzeugs ermittelt, wobei die Steuereinrichtung basierend auf dem ermittelten Verschmutzungsgrad den Reinigungsbedarf erkennt. Alternativ oder zusätzlich kann es vorgesehen sein, dass eine Benutzervorgabe einer Person betreffend den Reinigungsbedarf mittels der Steuereinrichtung erfasst wird, wobei die Steuereinrichtung basierend auf der erfassten Benutzervorgabe den Reinigungsbedarf erkennt.

Das Kraftfahrzeug ist also dazu ausgelegt, autonom zu fahren, wobei die Steuereinrichtung das autonome Manövrieren des Kraftfahrzeugs steuern kann. Das Kraftfahrzeug kann beispielsweise mit einem oder mehreren GPS-Sensoren, einer Navigationseinrichtung und Umfeldsensoren ausgestattet sein, sodass das Kraftfahrzeug autonom und zur ausgewählten Reinigungseinrichtung manövriert werden kann. Die Reinigung des Kraftfahrzeugs kann eine Außenreinigung und/oder Innenreinigung des Kraftfahrzeugs umfassen. Die Reinigungseinrichtung, welche ausgewählt und gebucht wurde, kann zudem dazu ausgelegt sein, den Reinigungsvorgang des Kraftfahrzeugs voll automatisch durchzuführen. Muss das Kraftfahrzeug beispielsweise die Reinigungseinrichtung für den Reinigungsvorgang durchfahren, so kann beispielsweise die Steuereinrichtung das Kraftfahrzeug durch die Reinigungseinrichtung manövrieren. Alternativ oder zusätzlich kann es auch vorgesehen sein, dass die Reinigungseinrichtung das Manövrieren des Kraftfahrzeugs durch die Reinigungseinrichtung hindurch vornehmen kann.

Der vorgegebene Abstellort muss nicht derselbe Ort sein, von wo aus das Kraftfahrzeug zur Reinigungseinrichtung gestartet ist. Wird das Kraftfahrzeug beispielsweise nachts gewaschen, so kann der vorgegebene Abstellort derselbe Ort sein, von wo aus das Kraftfahrzeug zur Reinigungseinrichtung gestartet ist, beispielsweise von einer Garage oder einem Parkplatz eines Fahrzeugnutzers. Besagte Person kann beispielsweise den vorgegebenen Abstellort vorgeben, sodass das Kraftfahrzeug die Person nach dem automatischen Reinigungsvorgang an dem vorgegeben Ort abholen kann, wobei dies nicht der selbe Ort sein muss, von wo aus das Kraftfahrzeug zur Reinigungseinrichtung gestartet ist.

Die Steuereinrichtung und/oder das Kraftfahrzeug können eine Kommunikationseinheit aufweisen, welche dazu eingerichtet und ausgelegt ist, den Auswahlvorgang und den Buchungsvorgang der betreffenden Reinigungseinrichtung durch eine entsprechende Kommunikation, mittelbar oder unmittelbar mit der betreffenden Reinigungseinrichtung, vorzunehmen. Dies kann beispielsweise über WLAN und/oder ein Mobilfunknetz erfolgen. Da das Kraftfahrzeug dazu ausgelegt ist, autonom zu fahren, und zwar ohne dass ein Fahrer im Kraftfahrzeug anwesend sein muss, kann das Kraftfahrzeug besonders einfach automatisch gereinigt werden. Das Kraftfahrzeug fährt beispielsweise autonom während geplanter Stillstandszeiten zur Reinigungseinrichtung und wird ebenfalls autonom durch den Reinigungsprozess geführt. Besagte Sensoreinrichtung des Kraftfahrzeugs kann dabei den Verschmutzungsgrad des Kraftfahrzeugs ermitteln, wobei die Steuereinrichtung basierend auf entsprechenden Daten, welche den Verschmutzungsgrad charakterisieren, den Reinigungsbedarf selbstständig erkennen kann. Alternativ oder zusätzlich kann besagte Person die Benutzervorgabe betreffend den Reinigungsbedarf vorgeben, wobei die Steuereinrichtung basierend auf der erfassten Benutzervorgabe den Reinigungsbedarf erkennen kann. Die Benutzervorgabe kann beispielsweise im Kraftfahrzeug selbst über eine geeignete Schnittstelle, über ein Smartphone, an einem Computer oder dergleichen eingegeben werden.

Dadurch, dass die fahrzeugseitige Sensoreinrichtung den Verschmutzungsgrad des Kraftfahrzeugs ermitteln kann, kann das Kraftfahrzeug besonders bedarfsgerecht automatisch gereinigt werden. Da alternativ oder zusätzlich die Benutzervorgabe der Person betreffend den Reinigungsbedarf erfasst werden kann, ist es möglich, den Vorgaben der Person betreffend den Reinigungsbedarf gerecht zu werden, selbst wenn die Steuereinrichtung basierend auf dem mittels der fahrzeugseitigen Sensoreinrichtung ermittelten Verschmutzungsgrad noch keinen Reinigungsbedarf erkennen beziehungsweise ermitteln sollte. Insbesondere ist es mittels des erfindungsgemäßen Verfahrens möglich, die automatische Reinigung des Kraftfahrzeugs in Form eines vollautomatisierten Prozesses durchzuführen. Somit ist es möglich, das Kraftfahrzeug besonders bedarfsgerecht und einfach automatisch zu reinigen.

Das erfindungsgemäße Verfahren sieht vor, dass das Auswählen der Reinigungseinrichtung und Buchen des Reinigungstermins in der ausgewählten Reinigungseinrichtung anhand zumindest des folgenden Kriteriums erfolgt:
- eine Wahrscheinlichkeit für ein Vorhandensein einer Parkmöglichkeit des Kraftfahrzeugs am vorgegebenen Abstellort soll zumindest einen vorgegebenen Wert aufweisen.

Erfindungsgemäß ist es also vorgesehen, dass die Steuereinrichtung berücksichtigt, wie hoch die Wahrscheinlichkeit für ein Vorhandensein einer Parkmöglichkeit des Kraftfahrzeugs am vorgegeben Abstellort ist, wobei die Steuereinrichtung in Abhängigkeit davon die Reinigungseinrichtung auswählt und den Reinigungstermin so bucht, dass die Wahrscheinlichkeit für das Vorhandensein der Parkmöglichkeit am vorgegebenen Abstellort zumindest einen vorgegebenen Wert aufweist. Beispielsweise ist es denkbar, dass ein Benutzer des Kraftfahrzeugs keine eigene private Parkmöglichkeit hat und das Kraftfahrzeug zum Beispiel im Bereich einer Anwohnerparkzone nachts abstellt. Die Steuereinrichtung kann auf Daten zugreifen, welche charakterisieren, zu welchen Zeiten welche Wahrscheinlichkeit besteht, dass innerhalb der Anwohnerparkzone eine Parkmöglichkeit vorhanden sein wird. In Abhängigkeit davon kann die Steuereinrichtung den Reinigungstermin so buchen, dass das Kraftfahrzeug beim Zurückfahren zum vorgegebenen Abstellort auch mit sehr hoher Wahrscheinlichkeit eine Parkmöglichkeit vorfindet.

Eine mögliche Ausführungsform der Erfindung sieht vor, dass die Sensoreinrichtung eine Frontkamera des Kraftfahrzeugs aufweist, mittels welcher der Verschmutzungsgrad des Kraftfahrzeugs ermittelt wird. Da das Kraftfahrzeug dazu ausgelegt ist, autonom zu fahren, verfügt es ohnehin über eine Vielzahl von Sensoren zur Umfelderkennung. Einer dieser Sensoren kann besagte Frontkamera des Kraftfahrzeugs sein, mittels welcher der Verschmutzungsgrad des Kraftfahrzeugs ermittelt werden kann. Alternativ oder zusätzlich zur Frontkamera kann die Sensoreinrichtung auch weitere, vorzugsweise optische, Sensoren aufweisen, welche dazu ausgelegt sind, den Verschmutzungsgrad des Kraftfahrzeugs zu ermitteln. Insbesondere wenn eine Vielzahl von Sensoren des Kraftfahrzeugs verwendet werden, welche an unterschiedlichen Positionen des Kraftfahrzeugs angeordnet sind, kann der Verschmutzungsgrad des Kraftfahrzeugs besonders gut ermittelt werden, sodass auch beispielsweise rein lokale Verschmutzungen des Kraftfahrzeugs zuverlässig ermittelt werden können.

Gemäß einer weiteren möglichen Ausführungsform der Erfindung ist es vorgesehen, dass die Reinigung des Kraftfahrzeugs automatisch abgerechnet wird. Besagte Person, bei welcher es sich beispielsweise um den Fahrzeugbesitzer und/oder Fahrzeughalter handeln kann, kann sich dafür zum Beispiel bei einem zentralen Reinigungsdienst oder dergleichen registrieren, wo die Person ihre Benutzerdaten und beispielsweise ihre Bankdaten inklusive einer Einzugsermächtigung hinterlegt haben kann. Dadurch ist es möglich, die Reinigung des Kraftfahrzeugs für die Person besonders bequem automatisiert abzurechnen.

In weiterer möglicher Ausgestaltung der Erfindung ist es vorgesehen, dass das Auswählen der Reinigungseinrichtung und Buchen des Reinigungstermins nur dann erfolgt, wenn zuvor eine Autorisierung erfolgt ist. Die Autorisierung kann beispielsweise durch dieselbe Person erfolgen, welche die Benutzervorgabe betreffend den Reinigungsbedarf vorgibt. Dadurch, dass das Auswählen und Buchen der Reinigungseinrichtung nur dann erfolgt, wenn zuvor eine Autorisierung erfolgt ist, kann sichergestellt werden, dass das Kraftfahrzeug nicht gegen den Willen von beispielsweise einem Fahrzeughalter gereinigt wird. Die Autorisierung kann beispielsweise dauerhaft bis auf Widerruf erfolgen. Alternativ ist es beispielsweise auch möglich, dass spätestens zum Abschließen des Buchungsvorgangs, also zum Buchen des Termins, die Autorisierung abgefragt wird. Dies bringt unter anderem den Vorteil mit sich, dass die betreffende Person immer darüber informiert wird, wenn das Kraftfahrzeug autonom eine Reinigungseinrichtung zum Reinigen des Kraftfahrzeugs anfahren soll.

Eine weitere mögliche Ausführungsform der Erfindung sieht vor, dass die Benutzervorgabe betreffend den Reinigungsbedarf einen Zeitpunkt umfasst, bis wann das Kraftfahrzeug gereinigt worden sein soll. So kann beispielsweise ein Fahrer des Kraftfahrzeugs vorgeben, dass das Kraftfahrzeug beispielsweise bis Samstagnachmittag gereinigt werden soll, zum Beispiel weil die Person dann mit dem Kraftfahrzeug einen Ausflug unternehmen möchte und wünscht, dass das Kraftfahrzeug dann besonders sauber ist. Die Auswahl der Reinigungseinrichtung und Buchung des betreffenden Termins erfolgt dann unter Berücksichtigung des vorgegebenen Zeitpunkts, sodass das Kraftfahrzeug bis zum vorgegebenen Zeitpunkt gereinigt am vorgegebenen Abstellort zur Verfügung steht.

In weiterer möglicher Ausgestaltung der Erfindung ist es vorgesehen, dass die Benutzervorgabe betreffend den Reinigungsbedarf ein Zeitintervall umfasst, gemäß welchem das Kraftfahrzeug regelmäßig gereinigt werden soll. So kann beispielsweise ein Fahrzeughalter vorgeben, dass das Kraftfahrzeug alle zwei Wochen gereinigt werden soll. Die Steuereinrichtung kann unter Berücksichtigung dieses Zeitintervalls die Reinigungseinrichtung auswählen und den Reinigungstermin buchen, sodass das vorgegebene Zeitintervall eingehalten wird. Sollte das Kraftfahrzeug innerhalb des Zeitintervalls schon so verschmutzt sein, kann es auch vorgesehen sein, dass das Kraftfahrzeug - beispielsweise erst nach erfolgter Zustimmung des Fahrzeughalters - zusätzlich gereinigt wird. Sollte danach innerhalb des Zeitintervalls eine erneute Reinigung des Kraftfahrzeugs nicht erforderlich sein, beispielsweise weil dies über die Sensoreinrichtung des Kraftfahrzeugs ermittelt wurde, so kann es auch vorgesehen sein, dass eine weitere Reinigung des Kraftfahrzeugs unterbleibt, bis das nächste Zeitintervall angebrochen beziehungsweise verstrichen ist. So kann sichergestellt werden, dass einerseits der Benutzervorgabe hinsichtlich des Zeitintervalls genüge getan wird, andererseits das Kraftfahrzeug nicht unnötig häufig gereinigt wird.

In weiterer möglicher Ausgestaltung der Erfindung ist es vorgesehen, dass das Auswählen der Reinigungseinrichtung und Buchen des Reinigungstermins in der ausgewählten Reinigungseinrichtung anhand zumindest eines der folgenden Kriterien erfolgt:
- das Kraftfahrzeug wird für die Dauer der Reinigung inklusive einer Hinfahrt zur Reinigungseinrichtung und einer Rückfahrt von der Reinigungseinrichtung zum vorgegebenen Ort nicht benötigt;
- Kosten für den Reinigungsvorgang und/oder für eine Anfahrt zur Reinigungseinrichtung und eine Rückfahrt zum Abstellort sollen miniert werden;
- ein vorgegebener Zwischenstopp soll auf einem Weg zur Reinigungseinrichtung liegen.

Die Steuereinrichtung kann also beispielsweise geplante Stillstandszeiten des Kraftfahrzeugs berücksichtigen, um in Abhängigkeit davon die Auswahl und Buchung der betreffenden Reinigungseinrichtung vorzunehmen. Dabei kann sowohl die eigentliche Dauer für die Reinigung als auch die Dauer für die Hinfahrt und Rückfahrt berücksichtigt werden. Die Steuereinrichtung kann beispielsweise auf einen elektronischen Kalender von einem Benutzer des Kraftfahrzeugs zugreifen, um so festzustellen, wann das Kraftfahrzeug nicht benötigt wird. Alternativ oder zusätzlich ist es beispielsweise auch möglich, dass die Steuerungseinrichtung auf Vergangenheitsdaten zugreift, auf deren Basis die Steuereinrichtung abschätzen kann, wann das Kraftfahrzeug sehr wahrscheinlich nicht bewegt werden wird. Die Steuereinrichtung kann auch Kosten für den Reinigungsvorgang und/oder Kosten für eine Anfahrt zur Reinigungseinrichtung sowie eine Rückfahrt zum vorgegebenen Abstellort berücksichtigen und den Reinigungstermin sowie die Reinigungseinrichtung so auswählen, dass diese Kosten minimiert werden. So kann die Steuereinrichtung beispielsweise mehrere Reinigungseinrichtungen automatisiert anfragen und Preise für verschiedene Reinigungstermine sowie Reinigungseinrichtungen abgleichen. Zudem kann die Steuereinrichtung alternativ oder zusätzlich auch jeweilige Distanzen zu den Reinigungseinrichtungen und damit verbundene Fahrtkosten berücksichtigen. Auf diese Weise kann die Steuereinrichtung den Reinigungsvorgang so einplanen, dass die damit verbundenen Kosten minimiert werden. Zudem ist es auch möglich, dass die Steuereinrichtung die Reinigungseinrichtung und/oder den Reinigungstermin so auswählt, dass ein vorgegebener Zwischenstopp auf dem Weg zur Reinigungseinrichtung zu einer gegebenen Zeit liegt. Beispielsweise ist es denkbar, dass ein Fahrzeugnutzer mit dem Kraftfahrzeug autonom oder selbst zur Arbeit fahren möchte, wobei die Arbeitsstätte der Zwischenstopp ist. Für eine gewisse Zeit nach Ankunft an der Arbeitsstätte wird der Fahrer das Kraftfahrzeug nicht benötigen, sodass die Steuereinrichtung beispielsweise in der Nähe der Arbeitsstätte eine geeignete Reinigungseinrichtung aussuchen kann. Auch ist es beispielsweise möglich, dass ein Benutzer des Kraftfahrzeugs sein Kraftfahrzeug innen gerne händisch säubert, über die Steuereinrichtung als Zwischenstopp eine geeignete Reinigungseinrichtung aussuchen kann, wo eine Innenraumreinigung händisch möglich ist. Danach kann das Kraftfahrzeug beispielsweise autonom zu der Reinigungseinrichtung bewegt werden, wo die Außenreinigung des Kraftfahrzeugs erfolgt. Es können auch andere beliebige Zwischenstopps beispielsweise von einem Benutzer vorgegeben werden, welche die Steuereinrichtung bei der Auswahl der Reinigungseinrichtung und Buchung des Reinigungstermins berücksichtigen kann. Unter anderem kann dadurch der erforderliche Weg zur betreffenden Reinigungseinrichtung minimiert werden.

Gemäß einer weiteren möglichen Ausführungsform der Erfindung ist es vorgesehen, dass eine fahrzeugexterne Sensoreinrichtung einen Verschmutzungsgrad des Kraftfahrzeugs ermittelt, wobei die Steuereinrichtung basierend auf dem mittels der fahrzeugexternen Sensoreinrichtung ermittelten Verschmutzungsgrad den Reinigungsbedarf erkennt. Die fahrzeugexterne Sensoreinrichtung kann beispielsweise an einem anderen Kraftfahrzeug angebracht sein. Es ist auch möglich, dass die fahrzeugexterne Sensoreinrichtung beispielsweise eine Kamera auf einem privaten Parkplatz eines Besitzers des Kraftfahrzeugs umfasst. Mittels der fahrzeugexternen Sensoreinrichtung kann also der Verschmutzungsgrad des Kraftfahrzeugs sehr gut festgestellt werden, sodass die Steuereinrichtung basierend auf dem mittels der fahrzeugexternen Sensoreinrichtung ermittelten Verschmutzungsgrad den Reinigungsbedarf ebenfalls erkennen kann. Die Steuereinrichtung kann dazu ausgelegt sein, eine Car2X-Kommunikation durchzuführen, um Daten von der fahrzeugexternen Sensoreinrichtung betreffend den Verschmutzungsgrad des Kraftfahrzeugs zu empfangen und auszuwerten. Mittels der fahrzeugexternen Sensoreinrichtung können beispielsweise Stellen des Kraftfahrzeugs hinsichtlich ihrer Verschmutzung beurteilt werden, welche mittels der fahrzeugseitigen Sensoreinrichtung nur schlecht oder gar nicht einsehbar sind. So kann der Reinigungsbedarf des Kraftfahrzeugs besonders bedarfsgerecht ermittelt werden, selbst wenn die fahrzeuginterne Sensoreinrichtung an bestimmten Stellen des Kraftfahrzeugs die Verschmutzung überhaupt nicht festgestellt hätte.

Die erfindungsgemäße Steuereinrichtung für ein Kraftfahrzeug ist dazu eingerichtet, das erfindungsgemäße Verfahren oder eine mögliche Ausführungsform des erfindungsgemäßen Verfahrens durchzuführen. Mögliche Ausgestaltungen des erfindungsgemäßen Verfahrens sind als mögliche Ausgestaltungen der Steuereinrichtung anzusehen, wobei die Steuereinrichtung insbesondere zur Durchführung der Verfahrensschritte aufweist.

Das erfindungsgemäße Kraftfahrzeug umfasst die erfindungsgemäße Steuereinrichtung oder eine mögliche Ausführungsform der erfindungsgemäßen Steuereinrichtung.

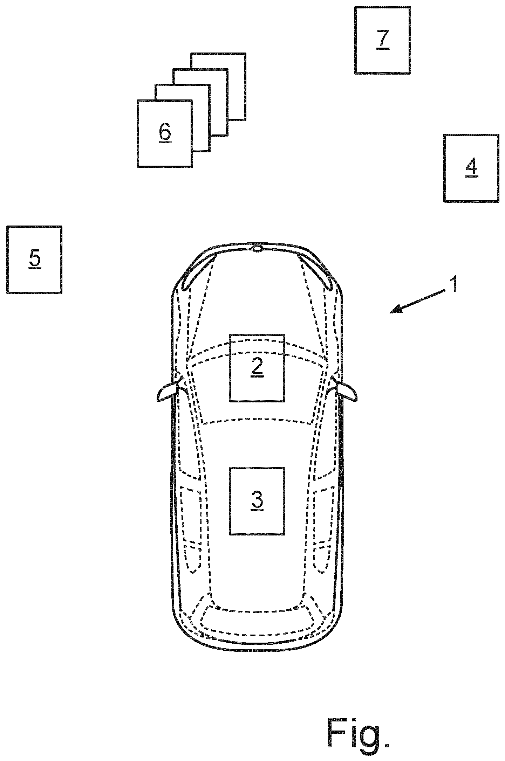

Die Zeichnung zeigt in der einzigen Figur eine schematische Darstellung eines Kraftfahrzeugs mit einer Steuereinrichtung, welche dazu eingerichtet ist, einen automatischen Reinigungsvorgang des Kraftfahrzeugs zu steuern.

Ein Kraftfahrzeug 1, das dazu eingerichtet und ausgelegt ist, autonom zu fahren, umfasst eine Steuereinrichtung 2. Die Steuereinrichtung 2 ist dazu eingerichtet, einen Reinigungsbedarf hinsichtlich des Kraftfahrzeugs 1 zu erkennen. Das Kraftfahrzeug 1 umfasst eine fahrzeugseitige Sensoreinrichtung 3, welche beispielsweise ein Frontkamera aufweisen kann, mittels welcher ein Verschmutzungsgrad des Kraftfahrzeugs 1 ermittelt werden kann. Die Sensoreinrichtung 3 kann Daten, welche den Verschmutzungsgrad des Kraftfahrzeugs 1 charakterisieren, an die Steuereinrichtung 2 übertragen. Die Steuereinrichtung 2 kann basierend auf dem ermittelten Verschmutzungsgrad den Reinigungsbedarf erkennen. Zudem kann eine Person 4 manuell einen Reinigungsbedarf hinsichtlich des Kraftfahrzeugs 1 vorgeben, wobei die Steuereinrichtung 2 dazu ausgelegt ist, diese Benutzervorgabe zu erfassen. Die Steuereinrichtung 2 kann beispielsweise eine hier nicht dargestellte Kommunikationseinrichtung aufweisen, welche dazu ausgelegt ist, die Benutzervorgabe beispielsweise über WLAN und/oder eine Mobilfunkverbindung zu erfassen. Dies kann beispielsweise erforderlich sein, falls die Person 4 die Benutzervorgabe über ihr Smartphone oder beispielsweise über einen PC eingibt. Alternativ kann die Person 4 den Reinigungsbedarf auch beispielsweise direkt über eine fahrzeugseitige und hier nicht dargestellte Benutzerschnittstelle eingeben.

Eine fahrzeugexterne Sensoreinrichtung 5 ist hier nur schematisch dargestellt. Diese fahrzeugexterne Sensoreinrichtung 5 kann dazu ausgelegt sein, einen Verschmutzungsgrad des Kraftfahrzeugs 1 zu erfassen und diesbezügliche Daten an die Steuereinrichtung 2 zu übermitteln, beispielsweise ebenfalls über WLAN und/oder eine Mobilfunkverbindung. Die fahrzeugexterne Sensoreinrichtung 5 kann beispielsweise eine Kamera an einem privaten Parkplatz umfassen, wo das Kraftfahrzeug 1 regelmäßig abgestellt wird. Die fahrzeugexterne Sensoreinrichtung 5 kann beispielsweise auch eine Kamera an einem anderen Kraftfahrzeug 1 aufweisen, welches beim Passieren des Kraftfahrzeugs 1 den Verschmutzungsgrad des Kraftfahrzeugs 1 ermitteln und diesbezügliche Daten an die Steuereinrichtung 2 übertragen kann.

Nachdem die Steuereinrichtung 2 den Reinigungsbedarf erkannt hat, wählt diese eine Reinigungseinrichtung 6, vorzugsweise aus einer Vielzahl von Reinigungseinrichtungen 6, aus und bucht einen Reinigungstermin in der ausgewählten Reinigungseinrichtung 6 anhand zumindest eines Kriteriums. Die Steuereinrichtung 2 kann beispielsweise berücksichtigen, dass das Kraftfahrzeug 1 für die Dauer der Reinigung inklusive einer Hinfahrt zur Reinigungseinrichtung 6 und einer Rückfahrt von der Reinigungseinrichtung 6 nicht benötigt wird. Die Steuereinrichtung 2 kann auch berücksichtigen, wie hoch eine Wahrscheinlichkeit für ein Vorhandensein einer Parkmöglichkeit des Kraftfahrzeugs 1 an einem vorgegebenen Abstellort 7 ist, wo das Kraftfahrzeug 1 nach dem Reinigungsvorgang wieder abgestellt werden soll. Dabei kann die Steuereinrichtung den Reinigungstermin so wählen, dass die Wahrscheinlichkeit für das Vorhandensein der besagten Parkmöglichkeit zumindest einen vorgegebenen Wert aufweist. Wird das Kraftfahrzeug 1 beispielsweise in einem Anwohnerparkbereich, also gerade nicht auf einem Privatstellplatz, regelmäßig geparkt, so kann die Steuereinrichtung 2 den Reinigungstermin so wählen, dass mit sehr hoher Wahrscheinlichkeit in dem Anwohnerparkbereich auch ein Parkplatz vorgefunden wird, wenn das Kraftfahrzeug 1 nach dem Reinigungsvorgang autonom dorthin bewegt wird.

Die Steuereinrichtung 2 kann beispielsweise auch Kosten für den Reinigungsvorgang und/oder für eine Anfahrt zur Reinigungseinrichtung 6 und für eine Rückfahrt von der Reinigungseinrichtung 6 zurück berücksichtigen, wobei die Steuereinrichtung 2 dazu eingerichtet sein kann, die Auswahl der Reinigungseinrichtung und den Reinigungstermin so zu wählen, dass diese Kosten minimiert werden. Die Steuereinrichtung 2 kann beispielsweise auch einen vorgegebenen Zwischenstopp auf einem Weg zur betreffenden Reinigungseinrichtung 6 berücksichtigen und den Reinigungstermin sowie die betreffende Reinigungseinrichtung 6 so auswählen, dass der vorgegebene Zwischenstopp zu einer vorgegebenen Zeit auf dem Weg zur Reinigungseinrichtung 6 liegt.

Die Steuereinrichtung 2 ist dazu eingerichtet, das Kraftfahrzeug 1 autonom zur ausgewählten Reinigungseinrichtung 6 zu manövrieren, sodass das Kraftfahrzeug dann spätestens zum gebuchten Reinigungstermin die betreffende Reinigungseinrichtung 6 erreicht, wo das Kraftfahrzeug 1 gereinigt wird. Die betreffende Reinigungseinrichtung 6 kann dazu ausgelegt sein, das Kraftfahrzeug 1 vollautonom sowohl von innen als auch von außen zu reinigen. Nachdem die Reinigung des Kraftfahrzeugs 1 beendet wurde, manövriert die Steuereinrichtung 2 das Kraftfahrzeug 1 zu dem vorgegeben Abstellort 7. Diesen Abstellort 7 kann die Person 4 beispielsweise vorgeben. Erfolgt keine Vorgabe von der Person 4, kann der Abstellort 7 auch der Ort sein, von wo aus das Kraftfahrzeug 1 in Richtung Reinigungseinrichtung 6 gestartet war. Geschieht die Reinigung des Kraftfahrzeugs 1 nachts, so kann es beispielsweise vorgesehen sein, dass das Kraftfahrzeug 1 einfach wieder zurück zu einer Garage der Person 4 manövriert wird. Alternativ - auch nachts - kann es beispielsweise vorgesehen sein, dass die Person 4 sich in einem Restaurant aufhält, wobei der vorgegebene Abstellort 7 dann das Restaurant sein kann. Tagsüber kann der vorgegebene Abstellort 7 beispielsweise auch eine Arbeitsstätte der Person 4 sein.

Das Auswählen der betreffenden Reinigungseinrichtung 6 und das Buchen des Reinigungstermins erfolgt nur dann, wenn zuvor eine Autorisierung erfolgt ist, beispielsweise durch die Person 4. Die Autorisierung kann beispielsweise dauerhaft bis auf Widerruf erfolgen. Alternativ oder zusätzlich ist es beispielsweise auch möglich, das die Steuereinrichtung 2 vor dem Buchen des Reinigungstermins die Person 4 um Autorisierung bittet und die Buchung nur dann vornimmt, wenn die Autorisierung erfolgt. Wie vorstehend bereits erwähnt, ist es möglich, dass die Person 4 eine Benutzervorgabe hinsichtlich des Reinigungsbedarfs machen kann. Diese Benutzervorgabe kann beispielsweise einen Zeitpunkt umfassen, bis wann die Person 4 wünscht, dass das Kraftfahrzeug 1 gereinigt worden sein soll. Möchte die Person 4 mit dem Kraftfahrzeug 1 beispielsweise einen Wochenendausflug unternehmen und wünscht, dass das Kraftfahrzeug 1 sowohl von innen als auch von außen gereinigt ist, so kann die Person 4 eine entsprechende Benutzervorgabe einstellen, welche die Steuereinrichtung 2 empfängt und berücksichtigt. Die Benutzervorgabe betreffend den Reinigungsbedarf kann auch beispielsweise ein Zeitintervall umfassen, gemäß welchem das Kraftfahrzeug 1 regelmäßig gereinigt werden soll. Auch dies kann die Steuereinrichtung 2 berücksichtigen.

Insgesamt wird mittels des erläuterten Verfahrens und der erläuterten Steuereinrichtung 2 eine Lösung bereitgestellt, mittels welcher das Kraftfahrzeug 1 besonders bedarfsgerecht und automatisch gereinigt werden kann. Dabei kann eine Verfügbarkeit des Kraftfahrzeugs 1 berücksichtigt werden, zudem können auch beispielsweise Kapazitäten von umliegenden Reinigungseinrichtungen 6, mit der Reinigung verbundene Kosten, mittels des Kraftfahrzeugs 1 zur Reinigungseinrichtung 6 zurückzuliegende Wegstrecken und dergleichen berücksichtigt werden. Die Reinigung des Kraftfahrzeugs 1 kann also bedarfsgerecht voll automatisch erfolgen. Zudem ist es auch möglich, dass nicht nur die Erkennung und Durchführung des Reinigungsvorgangs automatisch erfolgt, sondern auch eine Abrechnung des betreffenden Reinigungsvorgangs. Beispielsweise kann die Person 4 bei einem oder mehreren Dienstleistern eine Registrierung vornehmen und zum Beispiel jeweilige Lastschriftmandate hinterlegen. So ist es möglich, dass ein jeweiliges Abrechnen der betreffenden automatischen Reinigungsvorgänge ganz bequem für die Person 4 erfolgen kann.

### Bezugszeichenliste

- 1: Kraftfahrzeug
- 2: Steuereinrichtung des Kraftfahrzeugs
- 3: Sensoreinrichtung des Kraftfahrzeugs
- 4: Person
- 5: fahrzeugexterne Sensoreinrichtung
- 6: Reinigungseinrichtung
- 7: Abstellort

## Patentansprüche

1. Verfahren zum automatischen Reinigen eines Kraftfahrzeugs (1), umfassend folgende Schritte:
- Erkennen eines Reinigungsbedarfs mittels einer Steuereinrichtung (2) des Kraftfahrzeugs (1);
- Auswählen einer Reinigungseinrichtung (6) und Buchen eines Reinigungstermins in der ausgewählten Reinigungseinrichtung (6) anhand zumindest eines Kriteriums mittels der Steuereinrichtung (2), nachdem diese den Reinigungsbedarf erkannt hat;
- autonomes Manövrieren des Kraftfahrzeugs (1) zur ausgewählten Reinigungseinrichtung (6) mittels der Steuereinrichtung (2), sodass das Kraftfahrzeug (1) spätestens zum gebuchten Reinigungstermin die Reinigungseinrichtung (6) erreicht, wo das Kraftfahrzeug (1) gereinigt wird;
- autonomes Manövrieren des Kraftfahrzeugs (1) zu einem vorgegebenen Abstellort (7) mittels der Steuereinrichtung (2), nachdem die Reinigung des Kraftfahrzeugs (1) beendet wurde;
wobei
- eine Sensoreinrichtung (3) des Kraftfahrzeugs (1) einen Verschmutzungsgrad des Kraftfahrzeugs (1) ermittelt, wobei die Steuereinrichtung (2) basierend auf dem ermittelten Verschmutzungsgrad den Reinigungsbedarf erkennt;
- und/oder eine Benutzervorgabe einer Person (4) betreffend den Reinigungsbedarf mittels der Steuereinrichtung (2) erfasst wird, wobei die Steuereinrichtung (2) basierend auf der erfassten Benutzervorgabe den Reinigungsbedarf erkennt,
wobei das Auswählen der Reinigungseinrichtung (6) und Buchen des Reinigungstermins in der ausgewählten Reinigungseinrichtung (6) anhand zumindest des folgenden Kriteriums erfolgt:
- eine Wahrscheinlichkeit für ein Vorhandensein einer Parkmöglichkeit des Kraftfahrzeugs am vorgegebenen Abstellort (7) weist zumindest einen vorgegebenen Wert auf.

2. Verfahren nach Anspruch 1,
**dadurch gekennzeichnet, dass**
die Sensoreinrichtung (3) eine Frontkamera des Kraftfahrzeugs (1) aufweist, mittels welcher der Verschmutzungsgrad des Kraftfahrzeugs (1) ermittelt wird.

3. Verfahren nach Anspruch 1 oder 2,
**dadurch gekennzeichnet, dass**
die Reinigung des Kraftfahrzeugs (1) automatisch abgerechnet wird.

4. Verfahren nach einem der vorhergehenden Ansprüche,
**dadurch gekennzeichnet, dass**
das Auswählen der Reinigungseinrichtung (6) und Buchen des Reinigungstermins nur dann erfolgt, wenn zuvor eine Autorisierung erfolgt ist.

5. Verfahren nach einem der vorhergehenden Ansprüche,
**dadurch gekennzeichnet, dass**
die Benutzervorgabe betreffend den Reinigungsbedarf einen Zeitpunkt umfasst, bis wann das Kraftfahrzeug (1) gereinigt worden sein soll.

6. Verfahren nach einem der vorhergehenden Ansprüche,
**dadurch gekennzeichnet, dass**
die Benutzervorgabe betreffend den Reinigungsbedarf ein Zeitintervall umfasst, gemäß welchem das Kraftfahrzeug (1) regelmäßig gereinigt werden soll.

7. Verfahren nach einem der vorhergehenden Ansprüche,
**dadurch gekennzeichnet, dass**
das Auswählen der Reinigungseinrichtung (6) und Buchen des Reinigungstermins in der ausgewählten Reinigungseinrichtung (6) anhand zumindest eines der folgenden Kriterien erfolgt:
- das Kraftfahrzeug (1) wird für die Dauer der Reinigung inklusive einer Hinfahrt zur Reinigungseinrichtung (6) und einer Rückfahrt von der Reinigungseinrichtung (6) zum vorgegebenen Ort (7) nicht benötigt;
- Kosten für den Reinigungsvorgang und/oder für eine Anfahrt zur Reinigungseinrichtung (6) und eine Rückfahrt zum Abstellort (7) sollen miniert werden;
- ein vorgegebener Zwischenstopp soll auf einem Weg zur Reinigungseinrichtung (6) liegen.

8. Verfahren nach einem der vorhergehenden Ansprüche,
**dadurch gekennzeichnet, dass**
eine fahrzeugexterne Sensoreinrichtung (5) einen Verschmutzungsgrad des Kraftfahrzeugs (1) ermittelt, wobei die Steuereinrichtung (2) basierend auf dem mittels der fahrzeugexternen Sensoreinrichtung (5) ermittelten Verschmutzungsgrad den Reinigungsbedarf erkennt.

9. Steuereinrichtung (2) für ein Kraftfahrzeug (1), welche dazu eingerichtet ist, ein Verfahren nach einem der vorhergehenden Ansprüche durchzuführen.

10. Kraftfahrzeug (1) mit einer Steuereinrichtung (2) nach Anspruch 9.

## Claims

1. Method for automatically cleaning a motor vehicle (1), comprising the following steps:
- identifying a cleaning need by means of a control device (2) of the motor vehicle (1);
- selecting a cleaning facility (6) and booking a cleaning appointment in the selected cleaning facility (6) on the basis of at least one criterion by means of the control device (2) after the control device has identified the cleaning need;
- autonomously maneuvering the motor vehicle (1) to the selected cleaning facility (6) by means of the control device (2), so that the motor vehicle (1) reaches the cleaning facility (6) at the latest by the booked cleaning appointment, where the motor vehicle (1) is cleaned;
- autonomously maneuvering the motor vehicle (1) to a predetermined parking location (7) by means of the control device (2) after the cleaning of the motor vehicle (1) has been completed;
wherein
- a sensor device (3) of the motor vehicle (1) determines a degree of soiling of the motor vehicle (1), wherein the control device (2) identifies the cleaning need on the basis of the determined degree of soiling;
- and/or a user specification of a person (4) regarding the cleaning need is recorded by means of the control device (2), wherein the control device (2) identifies the cleaning need on the basis of the recorded user specification,
wherein the cleaning facility (6) is selected and the cleaning appointment is booked in the selected cleaning facility (6) on the basis of at least the following criterion:
- a probability of the presence of a parking possibility for the motor vehicle at the predetermined parking location (7) has at least a predetermined value.

2. Method according to claim 1,
**characterized in that**
the sensor device (3) has a front camera of the motor vehicle (1), by means of which the degree of soiling of the motor vehicle (1) is determined.

3. Method according to claim 1 or 2, **characterized in that** the cleaning of the motor vehicle (1) is automatically billed.

4. Method according to any of the preceding claims,
**characterized in that**
the cleaning facility (6) is selected and the cleaning appointment is booked only if authorization has been granted beforehand.

5. Method according to any of the preceding claims,
**characterized in that**
the user specification regarding the cleaning need includes a time by which the motor vehicle (1) should have been cleaned.

6. Method according to any of the preceding claims,
**characterized in that**
the user specification regarding the cleaning need includes a time interval according to which the motor vehicle (1) is to be cleaned regularly.

7. Method according to any of the preceding claims,
**characterized in that**
the cleaning facility (6) is selected and the cleaning appointment is booked in the selected cleaning facility (6) on the basis of at least one of the following criteria:
- the motor vehicle (1) is not required for the duration of the cleaning, including an outward journey to the cleaning facility (6) and a return journey from the cleaning facility (6) to the specified location (7);
- costs for the cleaning process and/or for a journey to the cleaning facility (6) and a return journey to the parking location (7) should be minimized;
- a predetermined intermediate stop should be on a route to the cleaning facility (6).

8. Method according to any of the preceding claims,
**characterized in that**
a vehicle-external sensor device (5) determines a degree of soiling of the motor vehicle (1), the control device (2) identifying the cleaning need on the basis of the degree of soiling determined by means of the vehicle-external sensor device (5).

9. Control device (2) for a motor vehicle (1), which is designed to carry out a method according to any of the preceding claims.

10. Motor vehicle (1) having a control device (2) according to claim 9.

## Revendications

1. Procédé de nettoyage automatique d'un véhicule automobile (1), comprenant les étapes suivantes :
- reconnaissance d'un besoin de nettoyage par le biais d'un dispositif de commande (2) du véhicule automobile (1) ;
- sélection d'un dispositif de nettoyage (6) et réservation d'un rendez-vous de nettoyage dans le dispositif de nettoyage (6) sélectionné à l'aide d'au moins un critère par le biais du dispositif de commande (2), après que celui-ci a reconnu le besoin de nettoyage ;
- manœuvre autonome du véhicule automobile (1) vers le dispositif de nettoyage (6) sélectionné par le biais du dispositif de commande (2), de sorte que le véhicule automobile (1) atteint le dispositif de nettoyage (6), où le véhicule automobile (1) est nettoyé, au plus tard au rendez-vous de nettoyage réservé ;
- manœuvre autonome du véhicule automobile (1) vers un lieu de dépôt (7) prédéfini par le biais du dispositif de commande (2), après la fin du nettoyage du véhicule automobile (1) ;
dans lequel
- un dispositif capteur (3) du véhicule automobile (1) détermine un degré d'encrassement du véhicule automobile (1), dans lequel le dispositif de commande (2) reconnaît le besoin de nettoyage en fonction du degré d'encrassement déterminé ;
- et/ou une consigne d'utilisateur d'une personne (4) concernant le besoin de nettoyage est saisie par le biais du dispositif de commande (2), dans lequel le dispositif de commande (2) reconnaît le besoin de nettoyage en fonction de la consigne d'utilisateur saisie, dans lequel la sélection du dispositif de nettoyage (6) et la réservation du rendez-vous de nettoyage dans le dispositif de nettoyage (6) sélectionné s'effectuent à l'aide d'au moins le critère suivant :
- une probabilité de présence d'une possibilité de stationnement du véhicule automobile au lieu de dépôt (7) prédéfini présente au moins une valeur prédéfinie.

2. Procédé selon la revendication 1,
**caractérisé en ce que**
le dispositif capteur (3) présente une caméra frontale du véhicule automobile (1), par le biais de laquelle le degré d'encrassement du véhicule automobile (1) est déterminé.

3. Procédé selon la revendication 1 ou 2, **caractérisé en ce que** le nettoyage du véhicule automobile (1) est comptabilisé automatiquement.

4. Procédé selon l'une des revendications précédentes,
**caractérisé en ce que**
la sélection du dispositif de nettoyage (6) et la réservation du rendez-vous de nettoyage ne sont effectuées que si une autorisation a été accordée au préalable.

5. Procédé selon l'une des revendications précédentes,
**caractérisé en ce que**
la consigne d'utilisateur concernant le besoin de nettoyage comprend un moment auquel le véhicule automobile (1) doit être nettoyé.

6. Procédé selon l'une des revendications précédentes,
**caractérisé en ce que**
la consigne d'utilisateur concernant le besoin de nettoyage comprend un intervalle de temps conformément auquel le véhicule automobile (1) doit être nettoyé régulièrement.

7. Procédé selon l'une des revendications précédentes,
**caractérisé en ce que**
la sélection du dispositif de nettoyage (6) et la réservation du rendez-vous de nettoyage dans le dispositif de nettoyage (6) sélectionné s'effectuent à l'aide d'au moins l'un des critères suivants :
- le véhicule automobile (1) n'est pas nécessaire pendant la durée du nettoyage, y compris un trajet aller vers le dispositif de nettoyage (6) et un trajet retour du dispositif de nettoyage (6) vers le lieu prédéfini (7) ;
- les coûts liés à l'opération de nettoyage et/ou à un trajet vers le dispositif de nettoyage (6) et à un trajet retour vers le lieu de dépôt (7) doivent être réduits ;
- un arrêt intermédiaire prédéfini doit se trouver sur un parcours menant au dispositif de nettoyage (6).

8. Procédé selon l'une des revendications précédentes,
**caractérisé en ce que**
un dispositif capteur (5) externe au véhicule détermine un degré d'encrassement du véhicule automobile (1), dans lequel le dispositif de commande (2) reconnaît le besoin de nettoyage en fonction du degré d'encrassement déterminé au moyen du dispositif capteur (5) externe au véhicule.

9. Dispositif de commande (2) pour un véhicule automobile (1), qui est conçu pour mettre en œuvre un procédé selon l'une des revendications précédentes.

10. Véhicule automobile (1) comportant un dispositif de commande (2) selon la revendication 9.
